# EUROPÄISCHE PATENTSCHRIFT

(11) **EP 2 166 673 B1**
(45) Veröffentlichungstag und Bekanntmachung des Hinweises auf die Patenterteilung: **14.11.2018**
(21) Anmeldenummer: 09012121.1
(22) Anmeldetag: 23.09.2009
(51) Int. Cl.: H04B 1/18

(54) **Vorrichtung mit einer Schaltungsanordnung zur Bearbeitung von Telekommunikationssignalen**
Device with a ciruit for processing telecommunication signals
Dispositif doté d'un circuit pour le traitement de signaux de télécommunication

(30) Priorität: 23.09.2008 ES 200802750
(43) Veröffentlichungstag der Anmeldung: 24.03.2010
(73) Patentinhaber: TELEVES, S.A., 15706 Santiago de Compostela (ES)
(72) Erfinder: Bescansa de la Gandara, Ramón, 15706 Santiago de Compostela (ES); Blanco Queiro, Manuel Elisardo, 15706 Santiago de Compostela (ES); Fernandez Carnero, José Luis, 15706 Santiago de Compostela (ES)
(74) Vertreter: Dosterschill, Peter

(56) Entgegenhaltungen:
- EP-A1- 1 653 609
- WO-A1-99/62258
- JP-A- 2002 057 948
- JP-A- 2008 099 128

## Beschreibung

Die vorliegende Erfindung betrifft eine Vorrichtung mit einer Schaltungsanordnung zur Bearbeitung von Telekommunikationssignalen für mindestens eine Empfangsantenne an einem Gebäude, an einem freistehenden Antennenmast oder in einem Gebäude nach dem Oberbegriff des Anspruchs 1.

Antennen eines Signalempfangssystems sind üblicherweise mit Vorrichtungen ausgestattet, die mit den Ausgängen der Antennen verbunden sind und die empfangene Signale verstärken, womit die Qualität dieser Signale verbessert wird, so dass die empfangenen Signale in besserer Signalqualität einer oder mehreren Empfangseinheiten zugeführt werden.

Es sind bereits verschiedene Arten von Vorrichtungen bekannt, die in der Nähe von Antennen angeordnet sind und die dazu dienen, den Pegel des empfangenen Signals zu verstärken und Verluste zu kompensieren, die durch Verbindungskabel entstehen.

Diese Vorrichtungen sind außerhalb von Gebäuden angeordnet, was den Zugang zum Beispiel bei einer Reparatur oder einem Ersatz der Vorrichtung erschwert. Diese Vorrichtungen enthalten Schaltungskomponenten mit festen, also nicht veränderbaren Parametern (Gewinn, Bandbreite, Ausgangspegel).

Aus EP 1 653 609 A1 ist eine Fernsehempfangs-Kopfeinheit bekannt, die eine Schaltungsanordnung zur automatischen Steuerung von Ausgangspegeln aufweist.

Aus WO 99/62258 A1 ist ein Breitbandsignal-Verteilungssystem für Gebäude bekannt.

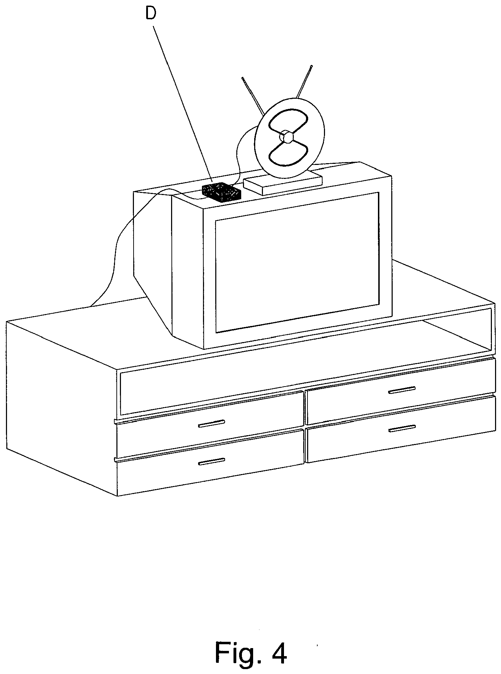

Aus JP 2008 099128 A ist ein "Power source separated booster" bekannt. Eine Fernbedienungseinrichtung ist über ein Verbindungskabel mit einer Antennensteckdose verbunden (Figur 4); die Fernbedienungseinrichtung_überlagert ein Steuersignal mit einem Hochfrequenzsignal und überträgt das gebildete Signal über eine Übertragungseinheit und über Kabel zu einem Verstärker, der nahe einer Antenne angeordnet ist.

Aus JP 2002 057948 A ist eine Empfangseinrichtung zum Empfang von Rundfunksignalen bekannt, die außerhalb eines Gebäudes empfangen werden und in mehreren Kanälen angeordnet sind. Die Empfangseinrichtung weist unter anderem eine Anordnung zur Extraktion von Rundfunksignalen auf, eine Anordnung zur Umwandlung extrahierter Signale in Signale in einen Kanal, der nicht zu Kanälen gehört, die von der Empfangseinrichtung empfangbar sind. Eine Fernbedienungsteuer-Vorrichtung ermöglicht einem Benutzer Schaltungsvorgänge zur Ansteuerung von Fernsehgeräten und einem Radiogerät in einem Gebäude vorzunehmen.

Der Erfindung liegt die Aufgabe zugrunde, eine Vorrichtung der eingangs genannten Art zu schaffen, die eine Modifikation ausgewählter Signalparameter in einfacher Weise auch in den Fällen ermöglicht, in denen die jeweilige Antenne vergleichsweise schwer zugänglich ist.

Diese Aufgabe wird durch eine Vorrichtung gelöst, die in den Ansprüchen definiert ist.
Die erfindungsgemäße Vorrichtung besteht aus einem Gehäuse, in dem eine Schaltungsanordnung angeordnet ist. Diese Schaltungsanordnung weist Schaltungskomponenten auf, mit denen Parameter empfangener oder zu empfangener Telekommunikationssignale verändert werden Eine Fernbedienungseinrichtung ist mittels eines Verbindungskabels oder alternativ hierzu drahtlos mit der Schaltungsanordnung verbunden bzw. verbindbar. Damit lässt sich die jeweilige Antenne auf unterschiedliche Betriebszustände in einfacher Weise und unabhängig von der Entfernung zwischen der Antenne bzw. Vorrichtung einerseits und dem Ort andererseits einstellen, an dem sich der Benutzer gerade befindet.
Die Schaltungsanordnung weist mindestens ein einstellbares Filter und/oder mindestens einen regelbaren Verstärker auf.
Das Filter ist hinsichtlich Resonanzfrequenz, Güte und/oder Verstärkung der Resonanzfrequenz einstellbar.

In der erfindungsgemäßen Vorrichtung können eine oder mehrere variable Abstimmung-Schaltungskomponenten als Kanal/Band-Zurückweisungs-Komponenten fungieren, dies sowohl hinsichtlich Frequenz als auch hinsichtlich Bandbreite.

In der erfindungsgemäßen Vorrichtung sind die Schaltungskomponenten zur Veränderung von Signalparametern über die Fernbedienungseinrichtung durch einen Benutzer bzw. Installateur ansteuerbar.

In der erfindungsgemäßen Vorrichtung können alle Parameter, so beispielsweise Abstimmungsparameter, Pegelanpassparameter, Frequenzparameter bei der eigentlichen Installation der Vorrichtung konfiguriert werden. Signale, die diese Parameter darstellen, können der Vorrichtung über die Fernbedienungseinrichtung drahtgebunden oder drahtlos zugeführt werden.

Ein weiteres Ausführungsbeispiel der erfindungsgemäßen Vorrichtung ist dadurch gekennzeichnet, dass in der Schaltungsanordnung das mindestens eine einstellbare Filter und/oder der mindestens eine regelbare Verstärker in Reihe geschaltet sind. Die Schaltungsanordnung kann mehrere parallel geschaltete Anordnungen aus einem Filter und einem in Reihe geschalteten Verstärker aufweisen. Bei dieser Ausführungsform wählt ein steuerbarer Umschalter eine der parallel geschalteten Anordnungen aus.

Die Erfindung wird anhand der in den Figuren dargestellten Ausführungsbeispiele beschrieben.

Es zeigt
- Figuren 1a und 1b: eine terrestrische Antenne an einem Gebäude mit einer erfindungsgemäßen Vorrichtung D in unterschiedlichen Positionen zur Antenne;
- Figuren 2a und 2b: eine terrestrische Antenne an einem Antennenmast mit einer erfindungsgemäßen Vorrichtung D in unterschiedlichen Positionen zur Antenne;
- Figur 3: eine Ausführungsform einer Schaltungsanordnung für eine erfindungsgemäße Vorrichtung D, und
- Figur 4: eine Innenantenne mit einer erfindungsgemäßen Vorrichtung D.

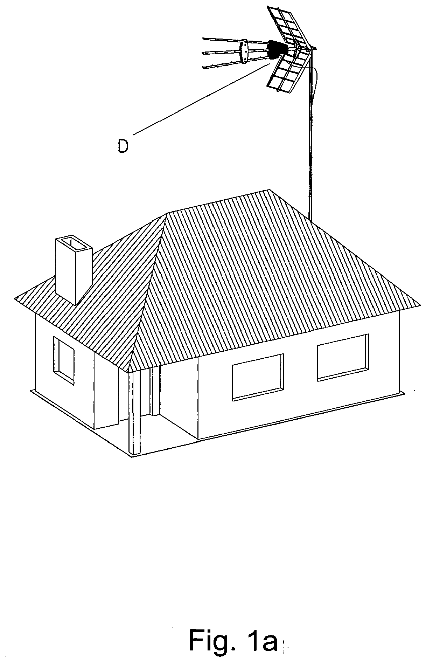

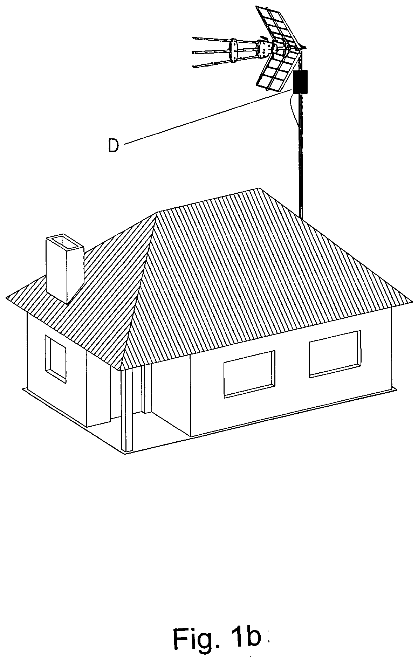

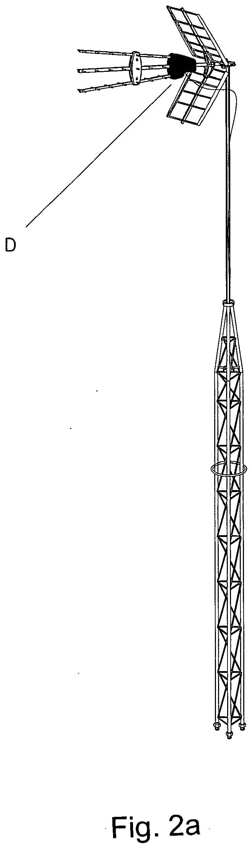

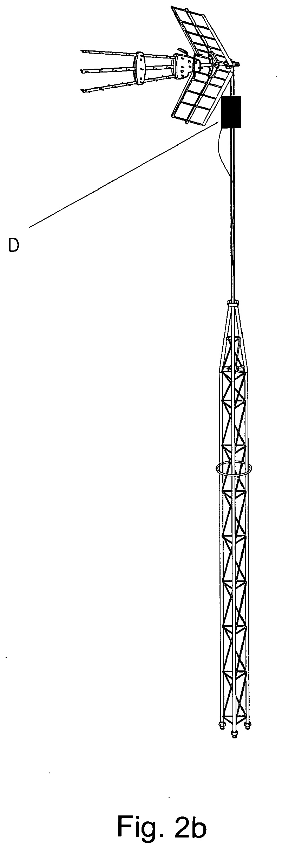

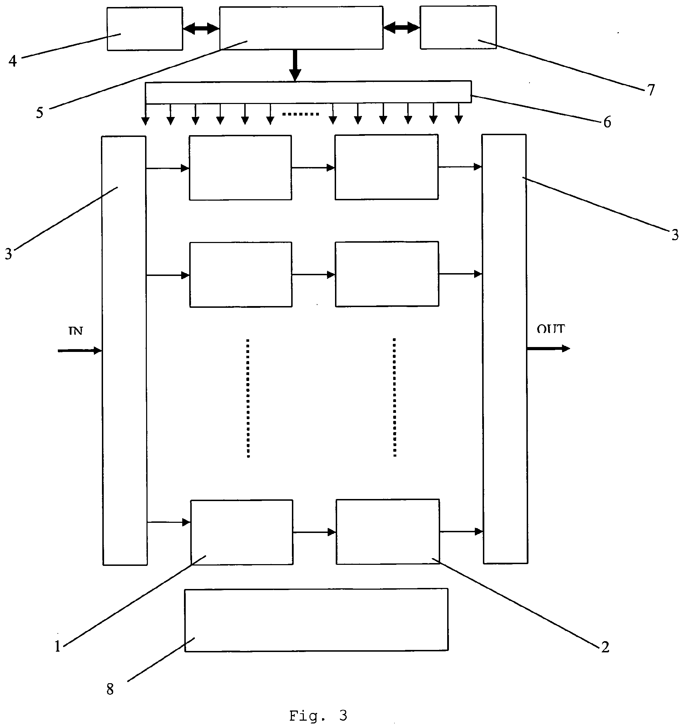

Die Figuren 1, 2 und 4 zeigen Beispiele von Empfangsantennen, in deren unmittelbarer Nähe jeweils eine erfindungsgemäße Vorrichtung D angeordnet ist. Diese enthält in einem Gehäuse eine Schaltungsanordnung, die anhand von Figur 3 beschrieben wird. Die Figuren 1 und 2 zeigen terrestrische Antennen im Außenbereichen; hierauf ist die Erfindung jedoch nicht eingeschränkt. So lässt sich die erfindungsgemäße Vorrichtung auch in Verbindung mit Parabolantennen bzw. mit Innenantennen (Figur 4) verwenden.

Die in Figur 3 in Form eines Blockschaltbildes dargestellte Schaltungsanordnung weist Schaltungskomponenten 1, 2 , 3 auf, mit denen Parameter empfangener oder zu empfangener Telekommunikationssignale verändert werden. Die Schaltungsanordnung ist mit einer Fernbedienungseinrichtung 8 verbunden. Mit dieser lassen sich die vorgenannten Parameter bei einer Inbetriebnahme einstellen (konfigurieren) beziehungsweise verändern. Die Fernbedienungseinrichtung wird von einem Installateur bzw. von einem Benutzer einer Einrichtung (z.B. Fernsehgerät, Radiogerät) bedient. Die Fernbedienungseinrichtung 8 kann durch einen PDA, PC, etc. gebildet sein.
Die Fernbedienungseinheit 8 übermittelt Steuersignale, mit denen die Parameter in der Vorrichtung eingestellt bzw. verändert werden, entweder drahtlos oder über ein in Figur 3 nicht dargestelltes Verbindungskabel, das die Schaltungskomponente mit der Fernbedienungseinheit 8 verbindet. Das Verbindungskabel ist in den Figuren 1a, 1b, 2a, 2b und 4 dargestellt.
Die veränderbaren Parameter empfangener oder zu empfangener Telekommunikationssignale sind beispielsweise Bandbreiten, Frequenzbereiche Kanäle, Güte.

Das mindestens eine einstellbare Filter 1 und/oder der mindestens eine regelbare Verstärker 2 sind beispielsweise in "Halbleiter-Schaltungstechnik", Ulrich Tietze, Christoph Schenk, Berlin, 2002 (ISBN 3-540-42849-6), 12. Auflage, Seiten 861 - 866; 1295 - 1299; beschrieben.

Bei der in Figur 3 dargestellten Schaltungsanordnung sind z. B. parallel geschaltete Schaltungskomponenten 1 variabler Abstimmung vorgesehen. Ebenso können z.B. parallel geschaltete Schaltungskomponenten zur Zurückweisung von Kanälen/ Bändern und Schaltungskomponenten zum Durchlass von Kanälen/Bändern vorgesehen sein. Diese Schaltungskomponenten variablen Gewinns stimmen die Frequenz und die Bandbreite der Telekommunikationssignale am Eingang der Vorrichtung ab. Die Schaltungskomponenten 2 variablen Gewinns (regelbarer Verstärker) passen den Pegel der Signale am Ausgang der Vorrichtung auf einen vorgebbaren Wert bzw. auf vorgebbare Werte an.

Insbesondere sind das Filter 1 und der Verstärker 2 in Reihe geschaltet. Die Schaltungsanordnung kann mehrere parallel geschaltete Anordnungen aus einem Filter und einem in Reihe geschalteten Verstärker aufweisen. Bei dieser Ausführungsform wählt ein steuerbarer Umschalter 3 eine der parallel geschalteten Anordnungen aus. Der Umschalter 3 ist über die Fernbedienungseinrichtung 8 steuerbar.

Die Schaltungsanordnung weist ferner einen Speicher 4, einen Mikroprozessor 5 und wenigstens einen Digital-/Analogwandler 6 auf. Dem Mikroprozessor 5 ist ein Steuerungsprogramm zugeordnet, das die Betriebsabläufe der Vorrichtung definiert. Im Speicher 4 sind z.B. Daten abgelegt, die die vorgenannten Parameter sowie Betriebsabläufe und Betriebszustände bezeichnen.
Eine Schaltungseinheit 7 stellt die Verbindung bzw. die Kommunikation zwischen der Vorrichtung und der Fernbedienungseinrichtung 8 her.

Wie in Figur 4 beispielhaft dargestellt, betrifft die Erfindung auch eine Vorrichtung D mit einer Schaltungsanordnung zur Bearbeitung von Telekommunikationssignalen für mindestens eine Empfangsantenne in einem Gebäude, wobei die Vorrichtung in unmittelbarer Nähe der Empfangsantenne angeordnet ist. Die genannte Schaltungsanordnung entspricht der oben beschriebenen Schaltungsanordnung. Die Vorrichtung D kann, wie in Figur 4 dargestellt, als separates Teil ausgebildet sein; alternativ kann die Vorrichtung auch in die eigentliche Innenantenne oder zum Beispiel in dem Fußteil integriert sein.

### Bezugszeichenliste

- 1: Schaltungskomponente für variable Abstimmung (Schaltungskomponente für Zurückweisung von Kanälen/Bändern, Schaltungskomponente für Durchlass von Kanälen/Bändern)
- 2: Schaltungskomponente für variablen Gewinn (Verstärker, Schaltungskomponente für Gewinnsteuerung)
- 3: Schaltungskomponente für Umschaltung/Auswahl von Kanälen/Bändern
- 4: Speicher
- 5: Mikroprozessor
- 6: Digital-/Analogwandler D/A
- 7: Schaltungseinheit
- 8: Fernbedienungseinrichtung (für Konfigurierung und Einstellung der Vorrichtung)
- D: Vorrichtung

## Patentansprüche

1. Vorrichtung (D) mit einer Schaltungsanordnung zur Bearbeitung von Telekommunikationssignalen für mindestens eine Empfangsantenne an einem Gebäude, an einem freistehenden Antennenmast oder in einem Gebäude, wobei die Vorrichtung in unmittelbarer Nähe der Empfangsantenne angeordnet ist,
wobei die Schaltungsanordnung Schaltungskomponenten (1, 2, 3) aufweist, mit denen Parameter empfangener oder zu empfangener Telekommunikationssignale verändert werden,
wobei die Schaltungsanordnung mit einer Fernbedienungseinrichtung (8) verbunden ist,
wobei die Schaltungsanordnung mindestens ein einstellbares Filter (1) und/oder mindestens einen regelbaren Verstärker (2) aufweist,
**dadurch gekennzeichnet, dass**, im Falle der Anwesenheit des Filters, das Filter (1) hinsichtlich Resonanzfrequenz und/oder Güte, und im Falle der Anwesenheit des regelbaren Verstärkers (2) die Verstärkung der Resonanzfrequenz, einstellbar ist, und
dass die Schaltungsanordnung eine Schaltungskomponente (7) aufweist, die mit einem Mikroprozessor (5) verbunden ist und die als Empfangseinrichtung für den Empfang von Signalen der Fernbedienungseinrichtung (8) ausgebildet ist, oder die mit einem Verbindungskabel verbunden ist, das die Schaltungskomponente (7) mit der Fernbedienungseinrichtung (8) verbindet, die in der Weise ausgestaltet ist, dass sie Steuersignale erzeugt, mit denen die Parameter empfangener oder zu empfangener Telekommunikationssignale in der Vorrichtung eingestellt oder verändert werden.

2. Vorrichtung nach Anspruch 1, **dadurch gekennzeichnet, dass** die Schaltungsanordnung einen Speicher (4) und einen Digital-/Analogwandler (6) aufweist, und dass der Mikroprozessor (5) mit der Fernbedienungseinrichtung (8) verbindbar ist.

3. Vorrichtung nach einem der vorstehenden Ansprüche, **dadurch gekennzeichnet, dass** mit den Schaltungskomponenten der Frequenzbereich und/oder die Bandbreite empfangener oder zu empfangener Telekommunikationssignale verändert wird.

4. Vorrichtung nach einem der vorstehenden Ansprüche, **dadurch gekennzeichnet, dass** die Schaltungsanordnung mindestens eine Anordnung aus einem Filter
(1) und einem in Reihe geschalteten Verstärker (2) aufweist, und dass die Schaltungsanordnung, sofern sie mindestens zwei parallel geschaltete Anordnungen aus einem Filter (1) und einem in Reihe geschalteten Verstärker
(2) aufweist, einen steuerbaren Umschalter (3) aufweist, mit dem eine parallel geschaltete Anordnung ausgewählt wird.

## Claims

1. A device (D) with circuit configuration for processing telecommunication signals for at least one receiving antenna on a building, on a free-standing antenna mast or in a building whereby the device is positioned in the immediate vicinity of the receiving antenna,
- whereby the circuit configuration features circuit components (1, 2, 3) with which the parameters of telecommunication signals which have been received or are to be received are changed,
- whereby the circuit configuration is connected to a remote control device (8),
- whereby the circuit configuration features at least one adjustable filter (1) and/or at least one variable amplifier (2),
**characterized in that**,
- in the presence of the filter (1), the filter is adjustable with regard to resonance frequency and/or quality, and in the presence of the variable amplifier (2), the resonance frequency amplification is adjustable and
- the circuit configuration features a circuit component (7) which is connected with a microprocessor (5) and is designed to be a receiving device for the receipt of signals from the remote control device (8) or which is connected via a connecting cable which connects the circuit component (7) with the remote control device (8) which is designed in such a way that it generates control signals with which the parameters of telecommunication signals which have been received or are to be received are adjusted or changed in the device.

2. A device according to claim 1, **characterized in that**,
- the circuit configuration features a memory (4) and a digital/analog converter (6) and
- the microprocessor (5) can be connected with the remote control device (8).

3. A device, according to one of the above claims, **characterized in that**,
- the frequency range and/or the bandwidth of telecommunication signals which have been received or are to be received is changed with the circuit components.

4. A device, according to one of the above claims, **characterized in that**,
- the circuit configuration features at least one arrangement consisting of a filter (1) and a series-connected amplifier (2) and
- the circuit configuration, providing it features at least two parallel-connected arrangements consisting of a filter (1) and a series-connected amplifier (2), features a controllable switch (3) with which a parallel-connected arrangement can be selected.

## Revendications

1. Dispositif (D) comportant un agencement de circuit destiné au traitement des signaux de télécommunication pour au moins une antenne de réception sur un bâtiment, sur un mât d'antenne isolé ou dans un bâtiment,
dans lequel le dispositif est disposé à proximité immédiate de l'antenne de réception, dans lequel l'agencement de circuit présente des composants de circuit (1, 2, 3), permettant de modifier des paramètres des signaux de télécommunication reçus ou à recevoir,
dans lequel l'agencement de circuit est relié à un moyen de commande à distance (8), dans lequel l'agencement de circuit présente au moins un filtre (1) ajustable et/ou au moins un amplificateur (2) réglable,
**caractérisé en ce que**,
en cas de présence du filtre, le filtre (1) est ajustable concernant la fréquence de résonance et/ou la qualité, et en cas de présence de l'amplificateur (2) réglable, l'amplification de la fréquence de résonance est ajustable, et
**que** l'agencement de circuit présente un composant de circuit (7), qui est relié à un microprocesseur (5) et est conçu en tant que moyen de réception pour la réception des signaux du moyen de commande à distance (8), ou qui est relié à un câble de connexion, qui relie le composant de circuit (7) au moyen de commande à distance (8), qui est conçu de manière à générer des signaux de commande, qui permettent d'ajuster ou de modifier les paramètres des signaux de télécommunication reçus ou à recevoir dans le dispositif.

2. Dispositif selon à la revendication 1, **caractérisé en ce que** l'agencement de circuit présente un dispositif de stockage (4) et un convertisseur numérique/analogique (6) et que le microprocesseur (5) peut être relié au moyen de commande à distance (8).

3. Dispositif selon une quelconque des revendications précédentes, **caractérisé en ce que** les composants du circuit permettent de modifier le régime de fréquence et/ou la bande passante des signaux de télécommunication reçus ou à recevoir.

4. Dispositif selon une quelconque des revendications précédentes, **caractérisé en ce que** l'agencement de circuit présente au moins un agencement composé d'un filtre (1) et d'un amplificateur (2) monté en série, et que l'agencement de circuit, lorsqu'il présente au moins deux agencements montés en parallèle composés d'un filtre (1) et d'un amplificateur (2) monté en série, présente un commutateur (3) apte à être commandé, qui permet de sélectionner un agencement monté en parallèle.
